# EUROPEAN PATENT SPECIFICATION

(11) **EP 3 087 683 B1**
(45) Date of publication and mention of the grant of the patent: **15.08.2018**
(21) Application number: 13900450.1
(22) Date of filing: 27.12.2013
(51) Int. Cl.: H04B 7/24, H04W 4/02

(54) **APPARATUS, SYSTEM AND METHOD OF BLUETOOTH COMMUNICATION**
VORRICHTUNG, SYSTEM UND VERFAHREN ZUR BLUETOOTH-KOMMUNIKATION
APPAREIL, SYSTÈME ET PROCÉDÉ DE COMMUNICATION BLUETOOTH

(43) Date of publication of application: 02.11.2016
(73) Proprietor: Intel Corporation, Santa Clara, CA 95054 (US)
(72) Inventor: WEIZMAN, Raz, 4335225 Ra'anana (IL); KVETNY, Eduard, 75700 Rishon-Lezion (IL); OESTERGREN, Johan, 80687 München (DE)
(74) Representative: HGF Limited
(86) International application number: PCT/US2013/077907
(87) International publication number: WO 2015/099751

(56) References cited:
- US-A1- 2011 281 519
- US-A1- 2011 307 380
- US-A1- 2011 307 380
- US-A1- 2013 171 934
- US-A1- 2013 171 934
- US-B1- 8 467 770
- US-B2- 7 657 255

## Description

### TECHNICAL FIELD

Embodiments described herein generally relate to Bluetooth communication.

### BACKGROUND

Bluetooth (BT) Low Energy (BLE) technology provides connectivity between BT mobile devices and a variety of systems, e.g., cars, exercise devices, computers, tablets and the like.

The BLE technology supports a relatively low power consumption of the BT mobile devices. For example, a BT mobile device may be a small sensor, a watch, or a Smartphone having a battery with limited power supply, and the BLE technology may enable the BT mobile device to communicate with the variety of systems using a relatively low power consumption.

According to the BLE technology, a first BT device and a second BT device may establish a connection between the first and second devices, to enable exchanging data between the first device and the second device.

The first and the second BT devices may perform one or more proximity measurements to determine a proximity between the first and second BT devices, for example, to determine if the distance between the first and second BT devices is lesser than a predefined distance. US 2013/171934 A1 describes a method and apparatus for transmission in a trunked radio communication system. US 2011/307380 A1 describes a system and method for establishing and managing a social wireless network.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative embodiments.
Fig. 2 is a schematic sequence diagram of operations and interactions between a first Bluetooth (BT) device and a second BT device, in accordance with some demonstrative embodiments.
Fig. 3 is a schematic sequence diagram of operations and interactions between a first BT device and a second BT device, in accordance with some demonstrative embodiments.
Fig. 4 is a schematic timing diagram of operations and interactions between a first BT device and a second BT device over a timeline, in accordance with some demonstrative embodiments.
Fig. 5 is a schematic flow chart illustration of a method of Bluetooth communication, in accordance with some demonstrative embodiments.
Fig. 6 is a schematic illustration of a product of manufacture, in accordance with some demonstrative embodiments.

### DETAILED DESCRIPTION

In the following detailed description, numerous specific details are set forth in order to provide a thorough understanding of some embodiments. However, it will be understood by persons of ordinary skill in the art that some embodiments may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one embodiment", "an embodiment", "demonstrative embodiment", "various embodiments" etc., indicate that the embodiment(s) so described may include a particular feature, structure, or characteristic, but not every embodiment necessarily includes the particular feature, structure, or characteristic. Further, repeated use of the phrase "in one embodiment" does not necessarily refer to the same embodiment, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some embodiments may be used in conjunction with various devices and systems, for example, a Personal Computer (PC), a desktop computer, a sensor device, a Bluetooth device, a Bluetooth Low Energy (BLE) device, an UltrabookTM, a mobile computer, a laptop computer, a notebook computer, a tablet computer, a server computer, a handheld computer, a handheld device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some embodiments may be used in conjunction with devices and/or networks operating in accordance with existing Bluetooth standards ("the Bluetooth standards"), e.g., including Bluetooth specification V 1.0, Dec 1, 1991*,* Bluetooth specification V 4.0, June 30, 2010*,* and/or future versions and/or derivatives thereof, devices and/or networks operating in accordance with existing IEEE 802.11 standards *(*IEEE 802.11-2012, IEEE Standard for Information technology-- Telecommunications and information exchange between systems Local and metropolitan area networks--Specific requirements Part 11: Wireless LAN Medium Access Control (MAC) and Physical Layer (PHY) Specifications, March 29, 2012*; IEEE802.11 task group ac (TGac) ("IEEE802.11-0910308r12* - *TGac Channel Model Addendum Document"); IEEE 802.11 task group ad (TGad) (*IEEE P502.11ad-2012, IEEE Standard for Information Technology - Telecommunications and Information Exchange Between Systems - Local and Metropolitan Area Networks - Specific Requirements - Part 11: Wireless LAN Medium Access Control (MAC) and Physical Layer (PHY) Specifications - Amendment 3: Enhancements for Very High Throughput in the 60GHz Band, 28 December, 2012*))* and/or future versions and/or derivatives thereof,, devices and/or networks operating in accordance with existing Wireless Fidelity (WiFi) Alliance (WFA) Peer-to-Peer (P2P) specifications (WiFi P2P technical specification, version 1.2, 2012) and/or future versions and/or derivatives thereof, devices and/or networks operating in accordance with existing cellular specifications and/or protocols, e.g., 3rd Generation Partnership Project (3GPP), 3GPP Long Term Evolution (LTE), and/or future versions and/or derivatives thereof, devices and/or networks operating in accordance with existing WirelessHD™ specifications and/or future versions and/or derivatives thereof, units and/or devices which are part of the above networks, and the like.

Some embodiments may be used in conjunction with one way and/or two-way radio communication systems, a Bluetooth device, a BLE device, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

The term "wireless device", as used herein, includes, for example, a device capable of wireless communication, a communication device capable of wireless communication, a communication station capable of wireless communication, a portable or non-portable device capable of wireless communication, or the like. In some demonstrative embodiments, a wireless device may be or may include a peripheral that is integrated with a computer, or a peripheral that is attached to a computer. In some demonstrative embodiments, the term "wireless device" may optionally include a wireless service.

The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

Some demonstrative embodiments may be used in conjunction with a WLAN. Other embodiments may be used in conjunction with any other suitable wireless communication network, for example, a wireless area network, a "piconet", a WPAN, a WVAN and the like.

The term "antenna", as used herein, may include any suitable configuration, structure and/or arrangement of one or more antenna elements, components, units, assemblies and/or arrays. In some embodiments, the antenna may implement transmit and receive functionalities using separate transmit and receive antenna elements. In some embodiments, the antenna may implement transmit and receive functionalities using common and/or integrated transmit/receive elements. The antenna may include, for example, a phased array antenna, a single element antenna, a set of switched beam antennas, and/or the like.

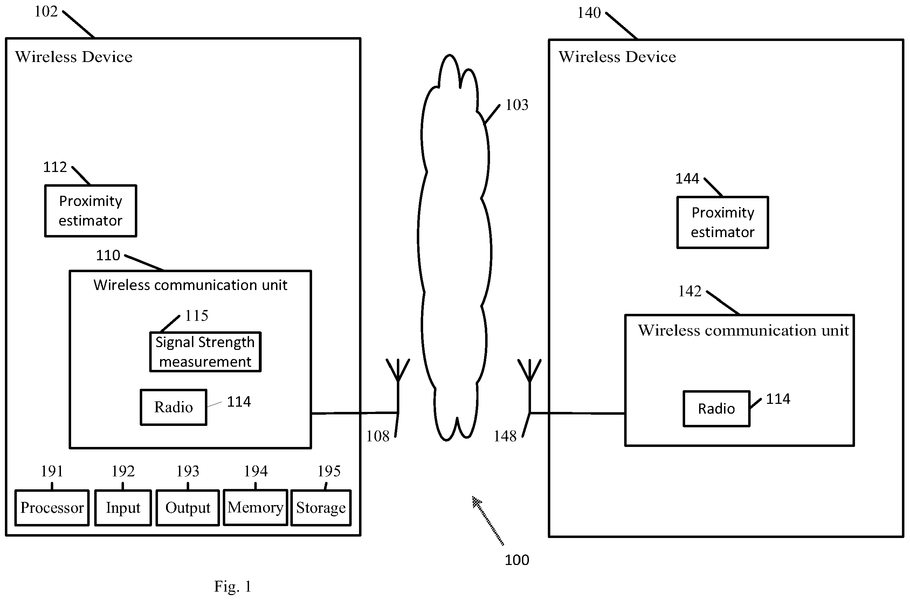

Reference is now made to Fig. 1, which schematically illustrates a block diagram of a system 100, in accordance with some demonstrative embodiments.

As shown in Fig. 1, in some demonstrative embodiments, system 100 may include one or more wireless communication devices capable of communicating content, data, information and/or signals via a wireless medium (WM) 103. For example, system 100 may include a wireless communication device 102 and a wireless communication device 140.

In some demonstrative embodiments, WM 103 may include a Bluetooth (BT) communication channel.

In some demonstrative embodiments, system 100 may include one or more BT devices capable of communicating wireless communication signals over the BT communication channel. For example, device 102 may perform the functionality of a first BT device, and/or device 140 may perform the functionality of a second BT device.

In some demonstrative embodiments, system 100 may include one or more Bluetooth Low Energy (BLE) devices capable of communicating wireless communication signals according to a BLE communication scheme. For example, device 102 may perform the functionality of a first BLE device, and/or device 140 may perform the functionality of a second BLE device.

In other embodiments, devices 102 and/or 140 may communicate wireless communication signals over the BT communication channel according to any other BT communication scheme.

In some demonstrative embodiments, device 102 and/or device 140 may include, for example, a User Equipment (UE), a mobile computer, a mobile device, a laptop computer, a notebook computer, a tablet computer, an Ultrabook™ computer, a mobile internet device, a handheld computer, a handheld device, a Smartphone, a sensor, a wearable device, a watch, a wristwatch, a wrist device, a PDA device, a handheld PDA device, a portable device, a mobile phone, a cellular telephone, a PCS device, a mobile or portable GPS device, a peripheral device, a vehicular device or the like.

In some demonstrative embodiments, at least one of devices 102 and 140 may include a mobile or portable device.

In some demonstrative embodiments, one of devices 102 and 140 may include a mobile or portable device and another one of device 102 and 140 may include anon-portable device. For example, one of devices 102 and 140 may include a mobile device, e.g., a portable computer or a mobile phone, and another one of devices 102 and 140 may include a docking device or another stationary device, e.g., a wireless display.

In some demonstrative embodiments, both devices 102 and 140 may include a mobile or portable device.

In some demonstrative embodiments, device 102 and/or device 140 may include one or more wireless communication units to perform wireless communication between device 102, device 140 and/or one or more other wireless communication devices. For example, device 102 may include a BT wireless communication unit 110, and/or device 140 may include a BT wireless communication unit 142 to perform BT wireless communication over the BT channel, e.g., as described below.

In some demonstrative embodiments, wireless communication units 110 and/or 142 may include one or more radios 114, e.g., including one or more wireless transmitters, receivers and/or transceivers able to send and/or receive wireless communication signals, RF signals, frames, blocks, transmission streams, packets, messages, data items, and/or data. In one example, the radios may include modulation elements, demodulation elements, amplifiers, analog to digital and digital to analog converters, filters, and/or the like. For example, wireless communication units 110 and/or 142 may include or may be implemented as part of a wireless Network Interface Card (NIC), and the like.

In some demonstrative embodiments, wireless communication units 110 and/or 142 may include, or may be associated with, one or more antennas. For example, wireless communicate unit 110 may be associated with one or more antennas 108 and/or wireless communicate unit 142 may be associated with one or more antennas 148.

Antennas 108 and/or 148 may include any type of antennas suitable for transmitting and/or receiving wireless communication signals, blocks, frames, transmission streams, packets, messages and/or data. For example, antennas 108 and/or 148 may include any suitable configuration, structure and/or arrangement of one or more antenna elements, components, units, assemblies and/or arrays. Antennas 108 and/or 148 may include, for example, antennas suitable for directional communication, e.g., using beamforming techniques. For example, antennas 108 and/or 148 may include a phased array antenna, a multiple element antenna, a set of switched beam antennas, and/or the like. In some embodiments, antennas 108 and/or 148 may implement transmit and receive functionalities using separate transmit and receive antenna elements. In some embodiments, antennas 108 and/or 148 may implement transmit and receive functionalities using common and/or integrated transmit/receive elements.

In some demonstrative embodiments, devices 102 and/or 140 may also include, for example, a processor 191, an input unit 192, an output unit 193, a memory unit 194, and a storage unit 195. Device 102 and/or device 140 may optionally include other suitable hardware components and/or software components. In some demonstrative embodiments, some or all of the components of device 102 and/or device 140 may be enclosed in a common housing or packaging, and may be interconnected or operably associated using one or more wired or wireless links. In other embodiments, components of device 102 and/or device 140 may be distributed among multiple or separate devices.

Processor 191 include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multipurpose or specific processor or controller. For example, processor 191 executes instructions, for example, of an Operating System (OS) of device 102 and/or of one or more suitable applications.

Memory unit 194 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 include, for example, a hard disk drive, a floppy disk drive, a Compact Disk (CD) drive, a CD-ROM drive, a DVD drive, or other suitable removable or non-removable storage units. For example, memory unit 194 and/or storage unit 195, for example, may store data processed by device 102.

Input unit 192 includes, for example, a keyboard, a keypad, a mouse, a touch-screen, a touch-pad, a track-ball, a stylus, a microphone, or other suitable pointing device or input device. Output unit 193 includes, for example, a monitor, a screen, a touch-screen, a flat panel display, a Cathode Ray Tube (CRT) display unit, a Liquid Crystal Display (LCD) display unit, a plasma display unit, one or more audio speakers or earphones, or other suitable output devices.

In some demonstrative embodiments, device 102 and device 140 may perform one or more proximity measurements between devices 102 and 140 ("the proximity measurements") to determine proximity between devices 102 and 140, e.g., as described below.

In one example, device 102 may include a wireless display and device 140 may include a Smartphone. The wireless display may display content, data, images and/or video from the Smartphone, for example, when a distance between the Smartphone and the display is lesser than a predefined distance, e.g., less than 3 meters. Accordingly, devices 102 and 140 may perform the proximity measurements to determine, for example, if the distance between devices 102 and 140 is lesser than the predefined distance, e.g., to enable the display, for example, to display video from the Smartphone.

In another example, device 140 may include an alerting wristwatch to be worn by a child and device 102 may include a Smartphone to be used by a parent of the child. The Smartphone may sound an alarm, for example, when a distance between the Smartphone and the child is greater than a predefined distance, e.g., greater than 20 meters, for example, to indicate the child moving away from the parent. Accordingly, devices 102 and 140 may perform the proximity measurements to determine, for example, if the distance between devices 102 and 140 is greater than the predefined distance, e.g., to sound the alarm at the Smartphone.

In some demonstrative embodiments, device 102 may include a proximity estimator 112 configured to determine proximity between device 102 and one or more other devices, e.g., device 140.

In some demonstrative embodiments, proximity estimator 112 may be implemented as part of wireless communication unit 110. In other embodiments, proximity estimator 112 may be implemented as another element of device 102.

In some demonstrative embodiments, proximity estimator 112 may determine the proximity between device 102 and device 140 based on the proximity measurements between device 102 and device 140, e.g., as described below.

In some demonstrative embodiments, proximity estimator 112 may perform a proximity measurement between devices 102 and 140 based on at least one message received by device 102 from device 140, e.g., as described below.

In some demonstrative embodiments, device 140 may transmit the message to device 102.

In some demonstrative embodiments, wireless communication unit 110 may receive the message and may measure a signal strength of the message, e.g., when received via antennas 108.

In some demonstrative embodiments, wireless communication unit 110 may include a signal strength measurement module 115 to measure the signal strength of the message received by wireless communication unit 110.

In some demonstrative embodiments, signal strength measurement module 115 may be implemented as part of a BT core of wireless communication unit 110. For example, signal strength measurement module 115 may be implemented as part of radio 114. In other embodiments, signal strength measurement module 115 may be implemented as part of any other element of wireless communication module 110.

In some demonstrative embodiments, strength measurement module 115 may determine a received signal strength indication (RSSI) of the message. In other embodiments, strength measurement module 115 may determine any other indication of the signal strength of the received message.

In some demonstrative embodiments, wireless communication unit 110 may report to proximity estimator 112 the RSSI of the message. For example, wireless communication unit 110 may transfer the RSSI to proximity estimator 112 via a host controller interface (HCI) as an unsolicited callback, or via any other interface.

In some demonstrative embodiments, proximity estimator 112 may determine proximity between devices 102 and 140 based on the RSSI of the message. For example, proximity estimator 112 may determine a power loss of the signal strength of the message, for example, by comparing a signal strength indication of a transmitted power of the message, e.g., as transmitted by wireless communication unit 142, and the RSSI of the message, as received at device 102. Proximity estimator 112 may determine the proximity between devices 102 and 140, for example, based on the power loss and a predefined power loss per distance.

In some demonstrative embodiments, proximity estimator 112 may determine proximity between devices 102 and 140 based on a plurality of proximity measurements corresponding to a plurality of messages received by device 102. For example, proximity estimator may determine the proximity between devices 102 and 140 by combining, e.g., averaging, a plurality of proximity measurements corresponding to a plurality of messages received at device 102 from device 140.

In some demonstrative embodiments, an accuracy of the proximity between devices 102 and 140, e.g., as determined by proximity estimator 112, may be based on the number of proximity measurements used by proximity estimator 112 to determine the proximity. For example, the accuracy of the determined proximity between devices 102 and 140 may increase if the number of proximity measurements preformed by proximity estimator 112 is increased.

Some demonstrative embodiments may enable performing the proximity measurements before device 102 and device 140 establish a connection between device 102 and device 140 over WM 103, e.g., according to the BLE communication scheme or any other BT protocol.

In some demonstrative embodiments, proximity estimator 112 may perform the proximity measurements between device 102 and device 140 based on one or more messages received by device 102 from device 140 before establishing the connection between device 102 and device 140, e.g., as described below.

In some demonstrative embodiments, proximity estimator 112 may perform the proximity measurements based on one or more messages configured to establish the connection between device 102 and device 140, e.g., as described below.

In some demonstrative embodiments, device 140 may perform the functionality of a BLE advertiser device. For example, wireless communication unit 142 may advertise device 140 to enable another device, e.g., device 102, to detect device 140 and to establish a connection with device 140.

In some demonstrative embodiments, device 102 may perform the functionality of a BLE scanner device. For example, wireless communication unit 110 may listen to WM 103 and may scan for messages from other devices, e.g., during a scan period.

In one example, device 140 may include a wireless display and device 102 may include a Smartphone. Wireless communication unit 142 may advertise device 140, for example, every 10 milliseconds (ms), to enable device 102 to detect device 140 and to display video from the Smartphone on the wireless display, for example, if the proximity between devices 102 and 140 is lesser than, e.g., 2 meters.

In some demonstrative embodiments, wireless communication units 110 and 142 may communicate during one or more scan intervals.

For example, a scan interval may include communicating an advertisement frame, a scan request and a scan response between wireless communication units 110 and 142, e.g., as described below.

In some demonstrative embodiments, device 140 may transmit an advertisement frame, for example, to advertise device 140.

In some demonstrative embodiments, device 140 may transmit the advertisement frame, for example, to enable device 102 to detect device 140.

In some demonstrative embodiments, device 102 may receive the advertisement frame from device 140, for example, while device 102 scans WM 103, e.g., during a scanning period of device 102.

In some demonstrative embodiments, device 102 may receive from device 140 the advertisement frame, e.g., by wireless communication unit 110 via antennas 108.

In some demonstrative embodiments, device 102 may transmit to device 140 a scan request, for example, in response to the advertisement frame.

In some demonstrative embodiments, device 140 may receive from device 102 the scan request, e.g., by wireless communication unit 142.

In some demonstrative embodiments, device 140 may transmit to device 102 a scan response in response to the scan request.

In some demonstrative embodiments, proximity estimator 112 may estimate the proximity between device 102 and device 140 based on the advertisement frame and the scan response received by device 102 from device 140.

In some demonstrative embodiments, wireless communication unit 110 may measure a signal strength of the advertisement frame and a signal strength of the scan response.

In some demonstrative embodiments, signal strength measurement module 115 may measure the signal strength of the advertisement frame and the signal strength of the scan response by measuring an RSSI of the advertisement frame and an RSSI of the scan response. In other embodiments, signal strength measurement module 115may generate any other indication of the signal strength of the advertisement frame and the signal strength of the scan response.

In some demonstrative embodiments, proximity estimator 112 may estimate the proximity between device 102 and device 140 based on the signal strength of the advertisement frame and the signal strength of the scan response, e.g., as described below.

In some demonstrative embodiments, proximity estimator 112 may estimate a first proximity between device 102 and device 140 based on the signal strength of the advertisement frame, e.g., as described above.

In some demonstrative embodiments, proximity estimator 112 may estimate a second proximity between device 102 and device 140 based on the signal strength of the scan response, e.g., as described above.

In some demonstrative embodiments, proximity estimator 112 may estimate the proximity between device 102 and device 140 based on a combination, e.g., an average or any other combination, of the first estimated proximity determined based on the advertisement frame and the second estimated proximity determined based on the scan response.

In some demonstrative embodiments, devices 102 and 140 may exchange one or more additional messages, for example, to enable proximity estimator to increase the accuracy of the proximity between devices 102 and 140, as determined by proximity estimator 112.

In some demonstrative embodiments, devices 102 and 140 may repeat the exchange of one or more of the advertisement, probe request and probe response messages during one or more additional scan intervals.

In some demonstrative embodiments, each additional scan interval may enable increasing the number of messages received by device 102 from device 140, for example, by two messages, e.g., the advertisement frame and the scan response.

In some demonstrative embodiments, increasing the number of scan intervals may result in an increase in the power consumption of device 102. In some demonstrative embodiments, proximity estimator 112 may be configured to estimate the proximity between device 102 and 140 based on one or messages ("the non-scan messages"), which are not received during the scan interval. For example, proximity estimator 112 may estimate the proximity between device 102 and 140 based on messages received between two consecutive scan intervals, e.g., as described below.

In some demonstrative embodiments, utilizing the non-scan messages may enable proximity estimator 112 to increase the number of proximity measurements, for example, by performing proximity measurements, based on the non-scan messages, e.g., in addition to the proximity measurements on the advertisement and scan response received during the scan intervals.

In some demonstrative embodiments, utilizing the non-scan messages may enable proximity estimator 112 to increase the accuracy of the determined proximity between devices 102 and 140. For example, proximity estimator 112 may estimate the proximity between device 102 and 140 based on the non-scan messages, e.g., in addition to the messages of the scan interval.

In some demonstrative embodiments, proximity estimator 112 may estimate the proximity between device 102 and 140 based on a scan request message transmitted from device 140 to device 102, e.g., as described below.

In some demonstrative embodiments, device 102 switch to perform the functionality of the BLE advertiser device, and device 140 may perform the functionality of the BLE scanner device, e.g., subsequent to a scan interval in which device 102 operates as the scanner device.

In some demonstrative embodiments, device 102 may transmit an advertisement frame.

In some demonstrative embodiments, device 140 may receive from device 102 the advertisement frame, for example, during a scanning period of device 140.

In some demonstrative embodiments, device 140 may receive from device 102 the advertisement frame, e.g., by wireless communication unit 142 via antennas 148.

In some demonstrative embodiments, device 140 may transmit to device 102 the scan request in response to the advertisement frame.

In some demonstrative embodiments, device 102 may receive from device 140 the scan request, e.g., by wireless communication unit 110.

In some demonstrative embodiments, device 102 may transmit to device 102 a scan response in response to the scan request.

In some demonstrative embodiments, proximity estimator 112 may estimate the proximity between device 102 and device 140 based on the scan request received by device 102 from device 140.

In some demonstrative embodiments, wireless communication unit 110 may measure a signal strength of the scan request.

In some demonstrative embodiments, signal strength measurement module 115 may measure the signal strength of the scan request by measuring an RSSI of the scan request. In other embodiments, the signal strength of the scan request may include any other indication of signal strength.

In some demonstrative embodiments, wireless communication unit 110 may provide the signal strength of the scan request to proximity estimator 112. For example, wireless communication unit 110 may transfer the RSSI of the scan request to proximity estimator 112 via a host controller interface (HCI) as an unsolicited callback, or via any other interface.

In some demonstrative embodiments, proximity estimator 112 may estimate the proximity between device 102 and device 140 based on the measured signal strength of the scan request, e.g., as described above.

In some demonstrative embodiments, estimating the proximity between device 102 and device 140 based on the signal strength of the scan request may increase the number of proximity measurements performed by proximity estimator 112, e.g., compared to the number of proximity measurements using the advertisement and scan response messages.

In some demonstrative embodiments, proximity estimator 112 may estimate the proximity between device 102 and device 140 based on three messages, while performing one scan interval. For example, proximity estimator 112 may estimate the proximity between device 102 and device 140 based on the scan request message, e.g., in addition to the advertisement frame and the scan response received during the scan interval.

In some demonstrative embodiments, estimating the proximity between devices 102 and 140 based on the three messages per scan interval may enable proximity estimator 112 to increase an accuracy of the determined proximity between device 102 and device 140, e.g., compared to an accuracy of estimating the proximity between devices 102 and 140 based on only the two messages of the scan interval, for example, without increasing the number of scan intervals.

In some demonstrative embodiments, estimating the proximity between devices 102 and 140 based on the three messages per scan interval may enable proximity estimator to increase an accuracy of the determined proximity between device 102 and device 140, e.g., compared to the accuracy of estimating the proximity between devices 102 and 140 based on only the two messages of the scan interval, for example, without increasing the power consumption of device 102, e.g., since the number of scan intervals is not increased.

In some demonstrative embodiments, estimating the proximity between devices 102 and 140 based on the three messages per scan interval may enable reducing the number of scan intervals to estimate the proximity between devices 102 and 140 at a particular accuracy level, for example, compared to a number of scan intervals required for estimating the proximity between devices 102 and 140 at the same particular accuracy level, e.g., if only the two messages of the scan interval are used per scan interval. For example, estimating the proximity between devices 102 and 140 based on the three messages per scan interval may enable reducing the number of scan intervals by one third, compared to the number of scan intervals when using only the two messages of the scan interval, e.g., while achieving a comparable accuracy level.

Accordingly, estimating the proximity between devices 102 and 140 based on the three messages per scan interval may enable reducing the power consumption of device 102, by one third, for example, without compromising the level of accuracy, e.g., compared to the power consumption of device 102 when estimating the proximity between devices 102 and 140 based on the two messages per scan interval.

In some demonstrative embodiments, device 140 may include a proximity estimator 144 to estimate the proximity between device 140 and another device, e.g., 102.

In some demonstrative embodiments, proximity estimator 144 may estimate the proximity between devices 140 and 102 based on one or more messages received by device 140 from device 102.

For example, proximity estimator 144 may estimate the proximity between devices 140 and 102 based on the scan request, the scan response and/or the advertisement frame transmitted from device 102 and received by device 140, e.g., as described above.

In some demonstrative embodiments, estimating the proximity between devices 140 and 102 by proximity estimator 144, for example, in addition to the proximity estimated by proximity estimator 112, may enable both devices 102 and 140 to estimate the proximity between devices 140 and 102.

In some demonstrative embodiments, estimating the proximity between devices 140 and 102 by both proximity estimators 144 and 112 may enable increasing an accuracy of the proximity measurement between devices 102 and 140.

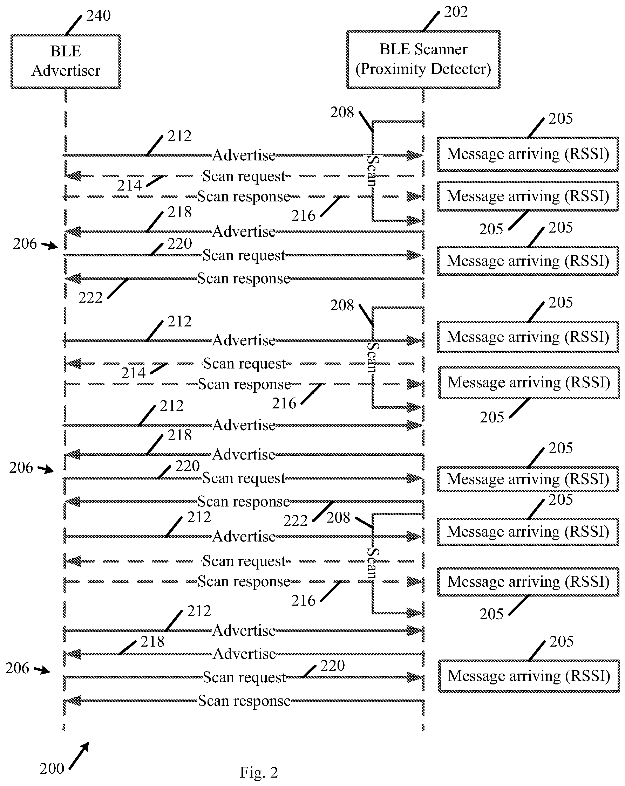

Reference is made to Fig. 2, which schematically illustrates a sequence diagram 200, which demonstrates operations and interactions between a BLE scanner device 202 and a BLE advertiser device 240, in accordance with some demonstrative embodiments. For example, BLE scanner device 202 may perform the functionality of device 102 (Fig. 1) and/or BLE advertiser device 240 may perform the functionality of device 140 (Fig. 1).

As shown in Fig. 2, device 240 may transmit to device 202 an advertise message 212. For example, device 140 (Fig. 1) may transmit advertise message 212 to device 102 (Fig. 1), e.g., as described above.

As shown in Fig. 2, device 202 may receive advertise message 212 from device 240 during a scan period 208 of device 202. For example, device 102 (Fig. 1) may receive advertise message 212 from device 140 (Fig. 1) during the scan period of device 102 (Fig. 1).

As shown in Fig. 2, device 202 may perform a measurement operation 205 of measuring an RSSI of advertise message 212 and determining proximity between device 202 and 240 based on the RSSI of advertise message 212. For example, wireless communication unit 110 (Fig. 1) may measure the RSSI of advertise message 212, and proximity estimator 112 (Fig. 1) may determine the proximity between devices 102 and 140 (Fig. 1) based on the RSSI of advertise message 212, e.g., as described above.

As shown in Fig. 2, device 202 may transmit to device 240 a scan request message 214, e.g., in response to advertise message 212. For example, device 102 (Fig. 1) may transmit scan request message 214 to device 140 (Fig. 1), e.g., as described above.

As shown in Fig. 2, device 240 may transmit to device 202 a scan response message 216, e.g., in response to scan request message 214. For example, device 140 (Fig. 1) may transmit scan response message 216 to device 102 (Fig. 1), for example, in response to scan request message 214, e.g., as described above.

As shown in Fig. 2, device 202 may receive scan response message 216 from device 240, and device 202 may perform measurement operation 205 based on scan response message 216. For example, device 102 (Fig. 1) may receive scan response message 212 from device 140 (Fig. 1). Wireless communication unit 110 (Fig. 1) may measure the RSSI of scan response message 216, and proximity estimator 112 (Fig. 1) may determine the proximity between devices 102 and 140 (Fig. 1) based on the RSSI of scan response message 216, e.g., as described above.

As shown in Fig. 2, device 202 may transmit an advertise message 218 to device 240, e.g., subsequent to scan period 208. For example, device 102 (Fig. 1) may transmit advertise message 218 to device 140 (Fig. 1), e.g., as described above.

As shown in Fig. 2, device 240 may receive advertise message 218 from device 202 during a scan period 206 of device 240. For example, device 240 (Fig. 1) may receive advertise message 218 from device 102 (Fig. 1) during the scan period of device 140 (Fig. 1) e.g., as described above.

As shown in Fig. 2, device 240 may transmit to device 202 a scan request message 220 in response to advertise message 218. For example, device 140 (Fig. 1) may transmit scan request message 220 to device 102 (Fig. 1) in response to advertise message 218, e.g., as described above.

As shown in Fig. 2, device 202 may receive scan request message 220 from device 240, and device 202 may perform measurement operation 205 based on scan request message 220. For example, device 102 (Fig. 1) may receive scan request message 220 from device 140 (Fig. 1). Wireless communication unit 110 (Fig. 1) may measure the RSSI of scan request message 220, and proximity estimator 112 (Fig. 1) may determine the proximity between devices 102 and 140 (Fig. 1) based on the RSSI of scan request message 220, e.g., as described above.

As shown in Fig. 2, device 202 may transmit to device 240 a scan response message 222, e.g., in response to scan request message 220. For example, device 102 (Fig. 1) may transmit scan response message 222 to device 140 (Fig. 1), for example, in response to scan request message 220, e.g., as described above.

As shown in Fig. 2, device 202 and device 240 may repeat exchanging the advertisement, scan request and/or scan response messages between device 202 and device 240.

As shown in Fig. 2, device 202 may receive scan request message 220 between two consecutive scanning periods 208 of device 202.

As shown in Fig. 2, device 202 may repeat measurement operation 205 on subsequent advertise messages 212, scan response messages 216 and/or scan request messages 220. For example, proximity estimator 112 (Fig. 1) may estimate the proximity between device 102 and device 140 (Fig. 1) based on the subsequent advertise messages 212, scan response messages 216 and/or scan request messages 220, e.g., as described above.

Referring back to Fig. 1, in some demonstrative embodiments device 102 may optionally select not to respond to the advertisement frame transmitted from device 104 to device 102, for example, during the scan period of device 102. For example, device 102 may not transmit the scan request to device 140, e.g., in response to the advertisement frame. Accordingly, device 140 may not receive a scan request and, accordingly, may not transmit the scan response to device 102.

In some demonstrative embodiments, proximity estimator 112 may estimate the proximity between device 102 and device 104 based on the advertisement frame, e.g., while not using the scan response.

In some demonstrative embodiments, proximity estimator 112 may estimate the proximity between device 102 and device 104 based on only two messages per scan interval, e.g., the advertisement frame and the scan request frame transmitted from device 104 to device 102, e.g., as described above.

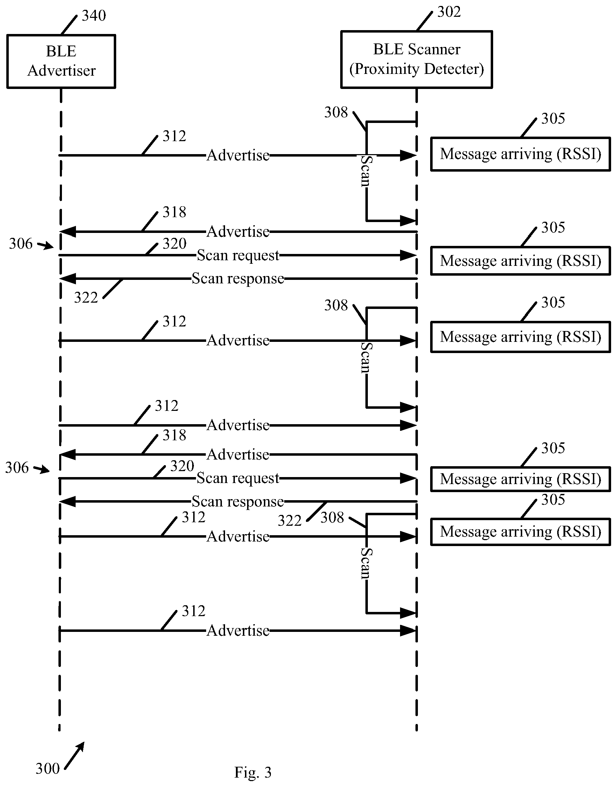

Reference is made to Fig. 3, which schematically illustrates a sequence diagram 300, which demonstrates operations and interactions between a BLE scanner device 302 and a BLE advertiser device 340, in accordance with some demonstrative embodiments. For example, BLE scanner device 302 may perform the functionality of device 102 (Fig. 1) and/or BLE advertiser device 340 may perform the functionality of device 140 (Fig. 1).

As shown in Fig. 3, device 340 may transmit to device 302 an advertise message 312. For example, device 140 (Fig. 1) may transmit advertise message 312 to device 102 (Fig. 1), e.g., as described above.

As shown in Fig. 3, device 302 may receive advertise message 312 from device 340 during a scan period 308 of device 302. For example, device 102 (Fig. 1) may receive advertise message 312 from device 140 (Fig. 1) during the scan period of device 102 (Fig. 1).

As shown in Fig. 3, device 302 may perform a measurement operation 305 of measuring an RSSI of advertise message 312 and determining proximity between device 302 and 340 based on the RSSI of advertise message 312. For example, wireless communication unit 110 (Fig. 1) may measure the RSSI of advertise message 312, and proximity estimator 112 (Fig. 1) may determine the proximity between devices 102 and 140 (Fig. 1) based on the RSSI of advertise message 312, e.g., as described above.

In some demonstrative embodiments, device 302 may optionally select not to respond to advertise message 312. For example, device 102 (Fig. 1) may optionally select not to respond to advertise message 312 from device 140 (Fig. 1).

As shown in Fig. 3, a scan request may not be transmitted by device 302 e.g., in response to advertise message 312 and, accordingly, device 340 may not transmit a scan response.

As shown in Fig. 3, device 302 may transmit an advertise message 318 to device 240. For example, device 102 (Fig. 1) may transmit advertise message 318 to device 140 (Fig. 1), e.g., as described above.

As shown in Fig. 3, device 340 may receive advertise message 318 from device 302 during a scan period 306 of device 340. For example, device 140 (Fig. 1) may receive advertise message 218 from device 102 (Fig. 1) during the scan period of device 140 (Fig. 1) e.g., as described above.

As shown in Fig. 3, device 340 may transmit to device 302 a scan request message 320 in response to advertise message 318. For example, device 140 (Fig. 1) may transmit scan request message 320 to device 102 (Fig. 1) in response to advertise message 318, e.g., as described above.

As shown in Fig. 3, device 302 may receive scan request message 320 from device 340, and device 302 may perform measurement operation 305 based on scan request message 320. For example, device 102 (Fig. 1) may receive scan request message 320 from device 140 (Fig. 1). Wireless communication unit 110 (Fig. 1) may measure the RSSI of scan request message 320, and proximity estimator 112 (Fig. 1) may determine the proximity between devices 102 and 140 (Fig. 1) based on the RSSI of scan request message 320, e.g., as described above.

As shown in Fig. 3, device 302 may transmit to device 340 a scan response message 322, e.g., in response to scan request message 320. For example, device 102 (Fig. 1) may transmit scan response message 322 to device 140 (Fig. 1), for example, in response to scan request message 320, e.g., as described above.

As shown in Fig. 3, device 302 and device 340 may repeat exchanging messages between device 302 and device 340, e.g., during one or more additional scan intervals.

As shown in Fig. 3, device 302 may receive scan request message 320 between two consecutive scanning periods 308 of device 302.

As shown in Fig. 3, device 302 may repeat measurement operation 305 on subsequent advertise messages 312 and/or scan request messages 320. For example, proximity estimator 112 (Fig. 1) may estimate the proximity between device 102 and device 140 (Fig. 1) based on the subsequent advertise messages 312 and/or scan request messages 320, e.g., as described above.

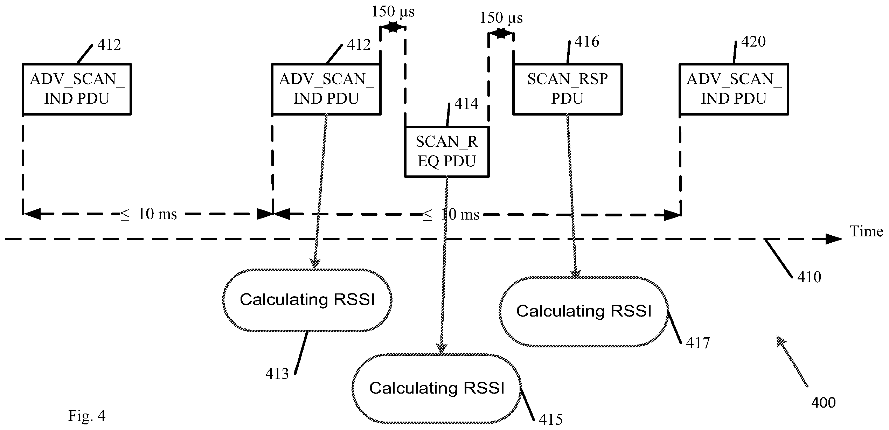

Reference is made to Fig. 4, which schematically illustrates a timing diagram 400, which demonstrates operations and interactions between a BLE scanner device and a BLE advertiser device over a timeline 410, in accordance with some demonstrative embodiments. For example, BLE scanner device 202 (Fig. 1) and BLE advertiser device 240 (Fig. 2) may perform one or more of the operations and interactions of diagram 200 (Fig. 2) over timeline 310.

As shown in Fig. 4, the advertiser device may transmit an advertisement frame 412, for example, every time period of 10 milliseconds (ms). For example, device 240 (Fig. 2) may transmit advertise message 212 (Fig. 2) to device 202 (Fig. 2) every 10 ms, e.g., as described above.

As shown in Fig. 4, a signal strength of advertisement frame 412 may be calculated (413), for example, upon receipt of advertisement frame 412 by the scanner device. For example, device 202 (Fig. 2) may perform operation 205 (Fig. 2) based on advertisement frame 212, e.g., as described above.

As shown in Fig. 4, the scanner device may transmit a scan request frame 414, e.g., in response to advertisement frame 412. For example, device 202 (Fig. 2) may transmit scan request frame 214 to device 240 (Fig. 2), e.g., as described above.

As shown in Fig. 4, a signal strength of scan request frame 414 may be calculated (315), for example, upon receipt of scan request frame 414 by the advertiser device. For example, device 240 (Fig. 2) may perform operation 205 (Fig. 2) based on scan request frame 414, e.g., as described above.

As shown in Fig. 4, the advertiser device may transmit a scan response frame 416, e.g., in response to scan request frame 414. For example, device 240 (Fig. 2) may transmit scan response frame 216 (Fig. 2) to device 202 (Fig. 2), e.g., as described above.

As shown in Fig. 4, a signal strength of scan response frame 416 may be calculated (417), for example, upon receipt of scan response frame 416 by the scanner device. For example, device 202 (Fig. 2) may perform operation 205 (Fig. 2) based on scan response frame 216 (Fig. 2), e.g., as described above.

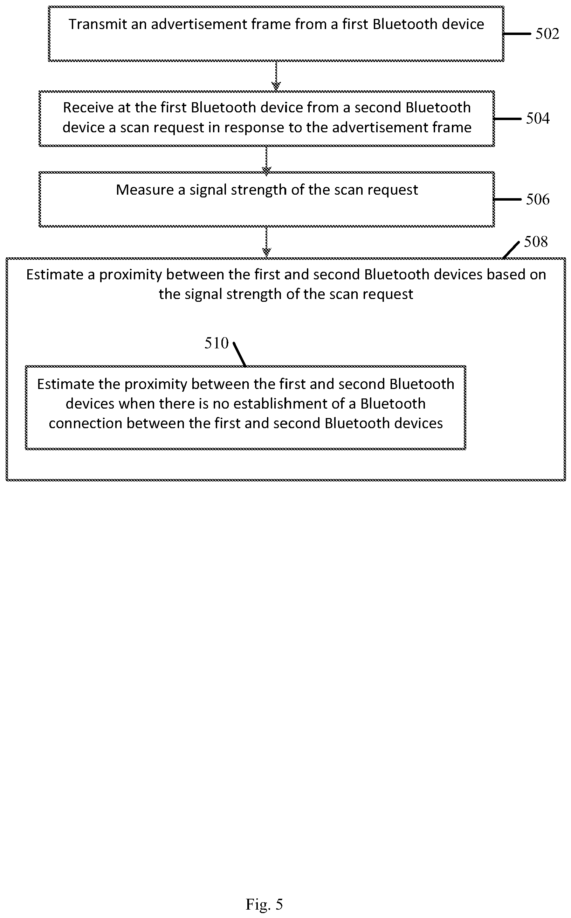

Reference is now made to Fig. 5, which schematically illustrates a method of Bluetooth communication, in accordance with some demonstrative embodiments. For example, one or more of the operations of the method of Fig. 5 may be performed by a wireless communication system, e.g., system 100 (Fig. 1); a wireless communication device, e.g., device 140 (Fig. 1) and/or device 102 (Fig. 1), a proximity estimator, e.g., proximity estimator 112 (Fig. 1) and/or proximity estimator 144 (Fig. 1); and/or a wireless communication unit, e.g., wireless communication unit 110 (Fig. 1) and/or wireless communication unit 142 (Fig. 1).

As indicated at block 502, the method may include transmitting an advertisement frame from a first Bluetooth device. For example, device 102 (Fig. 1) may transmit the advertisement frame, e.g., as described above.

As indicated at block 504, the method may include receiving at the first Bluetooth device a scan request from a second Bluetooth device, e.g., in response to the advertisement frame. For example, device 102 (Fig. 1) may receive the scan request in response to the advertisement frame, e.g., as described above.

As indicated at block 506, the method may include measuring a signal strength of the scan request. For example, signal measurement module 115 (Fig. 1) may measure the RSSI of the scan request, e.g., as described above.

As indicated at block 508, the method may include estimating a proximity between the first and second Bluetooth devices based on the signal strength of the scan request. For example, proximity estimator 112 (Fig. 1) may determine the proximity between device 102 and 140 (Fig. 1) based on the RSSI of the scan request, e.g., as described above.

As indicated at block 510, estimating the proximity between the first and second Bluetooth devices may include estimating the proximity between the first and second Bluetooth devices when there is no establishment of a Bluetooth connection between the first and second Bluetooth devices. For example, proximity estimator 112 (Fig. 1) may determine the proximity between devices 102 and 140 (Fig. 1) before establishing the connection between devices 102 and 140 (Fig. 1), e.g., as described above.

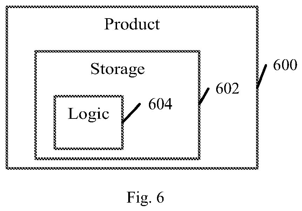

Reference is made to Fig. 6, which schematically illustrates a product of manufacture 600, in accordance with some demonstrative embodiments. Product 600 may include a non-transitory machine-readable storage medium 602 to store logic 604, which may be used, for example, to perform at least part of the functionality of device 102 (Fig. 1), wireless communication unit 110 (Fig. 1), wireless communication unit 142 (Fig. 1), device 140 (Fig. 1), proximity estimator 112 (Fig. 1), proximity estimator 144 (Fig. 1) and/or to perform one or more operations of the method of Fig. 5. The phrase "non-transitory machine-readable medium" is directed to include all computer-readable media, with the sole exception being a transitory propagating signal.

In some demonstrative embodiments, product 600 and/or machine-readable storage medium 602 may include one or more types of computer-readable storage media capable of storing data, including volatile memory, non-volatile memory, removable or non-removable memory, erasable or non-erasable memory, writeable or re-writeable memory, and the like. For example, machine-readable storage medium 502 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), Compact Disk ROM (CD-ROM), Compact Disk Recordable (CD-R), Compact Disk Rewriteable (CD-RW), flash memory (e.g., NOR or NAND flash memory), content addressable memory (CAM), polymer memory, phase-change memory, ferroelectric memory, silicon-oxide-nitride-oxide-silicon (SONOS) memory, a disk, a floppy disk, a hard drive, an optical disk, a magnetic disk, a card, a magnetic card, an optical card, a tape, a cassette, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative embodiments, logic 604 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative embodiments, logic 604 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, object-oriented, visual, compiled and/or interpreted programming language, such as C, C++, Java, BASIC, Matlab, Pascal, Visual BASIC, assembly language, machine code, and the like.

### EXAMPLES

The following examples pertain to further embodiments.
Example 1 includes an apparatus comprising a radio to receive at a first Bluetooth device a scan request from a second Bluetooth device and to measure a signal strength of the scan request; and a proximity estimator to estimate a proximity between the first and second Bluetooth devices based on the signal strength of the scan request.
Example 2 includes the subject matter of Example 1 and optionally, wherein the radio is to transmit an advertisement frame, and to receive the scan request in response to the advertisement frame.
Example 3 includes the subject matter of Example 1 and optionally, wherein the radio is to receive an advertisement frame and a scan response from the second Bluetooth device during a scanning period of the first Bluetooth device, and to measure a signal strength of the advertisement frame and a signal strength of the scan response, and wherein the proximity estimator is to estimate the proximity based on the signal strength of the scan request, the signal strength of the advertisement frame and the signal strength of the scan response.
Example 4 includes the subject matter of any one of Examples 1-3 and optionally, wherein the radio is to receive the scan request between two consecutive scanning periods of the first Bluetooth device.
Example 5 includes the subject matter of any one of Examples 1-4 and optionally, wherein the proximity estimator is to estimate the proximity when there is no establishment of a Bluetooth connection between the first and second Bluetooth devices.
Example 6 includes the subject matter of any one of Examples 1-5 and optionally, wherein the signal strength of the scan request comprises a Receive Signal Strength Indication (RSSI).
Example 7 includes the subject matter of any one of Examples 1-6 and optionally, wherein the first Bluetooth device comprises a Bluetooth Low Energy (BLE) device.
Example 8 includes a system comprising a first mobile device including at least one antenna; a Bluetooth radio to receive via the antenna a scan request from a second device and to measure a signal strength of the scan request; a proximity estimator to estimate a proximity between the first and second devices based on the signal strength of the scan request; a memory; and a processor.
Example 9 includes the subject matter of Example 8 and optionally, wherein the radio is to transmit an advertisement frame, and to receive the scan request in response to the advertisement frame.
Example 10 includes the subject matter of Example 8 and optionally, wherein the radio is to receive an advertisement frame and a scan response from the second device during a scanning period of the first device, and to measure a signal strength of the advertisement frame and a signal strength of the scan response, and wherein the proximity estimator is to estimate the proximity based on the signal strength of the scan request, the signal strength of the advertisement frame and the signal strength of the scan response.
Example 11 includes the subject matter of any one of Examples 8-10 and optionally, wherein the radio is to receive the scan request between two consecutive scanning periods of the first device.
Example 12 includes the subject matter of any one of Examples 8-11 and optionally, wherein the proximity estimator is to estimate the proximity when there is no establishment of a Bluetooth connection between the first and second devices.
Example 13 includes the subject matter of any one of Examples 8-12 and optionally, wherein the signal strength of the scan request comprises a Receive Signal Strength Indication (RSSI).
Example 14 includes the subject matter of any one of Examples 8-13 and optionally, wherein the first device comprises a Bluetooth Low Energy (BLE) device.
Example 15 includes a method comprising receiving at a first Bluetooth device a scan request from a second Bluetooth device; measuring a signal strength of the scan request; and estimating a proximity between the first and second Bluetooth devices based on the signal strength of the scan request.
Example 16 includes the subject matter of Example 15 and optionally, comprising transmitting an advertisement frame, and receiving the scan request in response to the advertisement frame.
Example 17 includes the subject matter of Example 15 and optionally, comprising receiving an advertisement frame and a scan response from the second Bluetooth device during a scanning period of the first Bluetooth device, measuring a signal strength of the advertisement frame and a signal strength of the scan response, and estimating the proximity based on the signal strength of the scan request, the signal strength of the advertisement frame and the signal strength of the scan response.
Example 18 includes the subject matter of any one of Examples 15-17 and optionally, comprising receiving the scan request between two consecutive scanning periods of the first Bluetooth device.
Example 19 includes the subject matter of any one of Examples 15-18 and optionally, comprising estimating the proximity when there is no establishment of a Bluetooth connection between the first and second Bluetooth devices.
Example 20 includes the subject matter of any one of Examples 15-19 and optionally, wherein the signal strength of the scan request comprises a Receive Signal Strength Indication (RSSI).
Example 21 includes the subject matter of any one of Examples 15-20 and optionally, wherein the first Bluetooth device comprises a Bluetooth Low Energy (BLE) device.
Example 22 includes a product including a non-transitory storage medium having stored thereon instructions that, when executed by a machine, result in receiving at a first Bluetooth device a scan request from a second Bluetooth device; measuring a signal strength of the scan request; and estimating a proximity between the first and second Bluetooth devices based on the signal strength of the scan request.
Example 23 includes the subject matter of Example 22 and optionally, wherein the instructions result in transmitting an advertisement frame, and receiving the scan request in response to the advertisement frame.
Example 24 includes the subject matter of Example 22 and optionally, wherein the instructions result in receiving an advertisement frame and a scan response from the second Bluetooth device during a scanning period of the first Bluetooth device, measuring a signal strength of the advertisement frame and a signal strength of the scan response, and estimating the proximity based on the signal strength of the scan request, the signal strength of the advertisement frame and the signal strength of the scan response.
Example 25 includes the subject matter of any one of Examples 22-24 and optionally, wherein the instructions result in receiving the scan request between two consecutive scanning periods of the first Bluetooth device.
Example 26 includes the subject matter of any one of Examples 22-25 and optionally, wherein the instructions result in estimate the proximity when there is no establishment of a Bluetooth connection between the first and second Bluetooth devices.
Example 27 includes the subject matter of any one of Examples 22-26 and optionally, wherein the signal strength of the scan request comprises a Receive Signal Strength Indication (RSSI).
Example 28 includes the subject matter of any one of Examples 22-27 and optionally, wherein the first Bluetooth device comprises a Bluetooth Low Energy (BLE) device.
Example 29 includes an apparatus comprising means for receiving at a first Bluetooth device a scan request from a second Bluetooth device; means for measuring a signal strength of the scan request; and means for estimating a proximity between the first and second Bluetooth devices based on the signal strength of the scan request.
Example 30 includes the subject matter of Example 29 and optionally, comprising means for transmitting an advertisement frame, and receiving the scan request in response to the advertisement frame.
Example 31 includes the subject matter of Example 29 and optionally, comprising means for receiving an advertisement frame and a scan response from the second Bluetooth device during a scanning period of the first Bluetooth device, means for measuring a signal strength of the advertisement frame and a signal strength of the scan response, and means for estimating the proximity based on the signal strength of the scan request, the signal strength of the advertisement frame and the signal strength of the scan response.
Example 32 includes the subject matter of any one of Examples 29-31 and optionally, comprising means for receiving the scan request between two consecutive scanning periods of the first Bluetooth device.
Example 33 includes the subject matter of any one of Examples 29-32 and optionally, comprising means for estimating the proximity when there is no establishment of a Bluetooth connection between the first and second Bluetooth devices.
Example 34 includes the subject matter of any one of Examples 29-33 and optionally, wherein the signal strength of the scan request comprises a Receive Signal Strength Indication (RSSI).
Example 35 includes the subject matter of any one of Examples 29-34 and optionally, wherein the first Bluetooth device comprises a Bluetooth Low Energy (BLE) device.

Functions, operations, components and/or features described herein with reference to one or more embodiments, may be combined with, or may be utilized in combination with, one or more other functions, operations, components and/or features described herein with reference to one or more other embodiments, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true scope of the invention.

## Claims

1. An apparatus of wireless communication, the apparatus comprising:
a radio (114) to receive at a first Bluetooth device (102) a scan request from a second Bluetooth device (140) between two consecutive scanning periods of said first Bluetooth device and to measure a signal strength of said scan request; and
a proximity estimator (112) to estimate a proximity between said first and second Bluetooth devices based on the signal strength of said scan request.

2. The apparatus of claim 1, wherein said radio (114) is to transmit an advertisement frame, and to receive said scan request in response to said advertisement frame.

3. The apparatus of claim 1, wherein said radio (114) is to receive an advertisement frame and a scan response from said second Bluetooth device (140) during a scanning period of said first Bluetooth device (102), and to measure a signal strength of said advertisement frame and a signal strength of said scan response, and wherein said proximity estimator (112) is to estimate said proximity based on the signal strength of said scan request, the signal strength of said advertisement frame and the signal strength of said scan response.

4. The apparatus of any one of claims 1-3, wherein said proximity estimator (112) is to estimate said proximity when there is no establishment of a Bluetooth connection between said first and second Bluetooth devices.

5. The apparatus of any one of claims 1-4, wherein the signal strength of said scan request comprises a Receive Signal Strength Indication (RSSI).

6. The apparatus of any one of claims 1-5, wherein said first Bluetooth device (102) comprises a Bluetooth Low Energy (BLE) device.

7. A system (100) of wireless communication, the system comprising:
a first mobile device (102) including:
at least one antenna (108); and
the apparatus of any one of claims 1-6.

8. A method of wireless communication, the method comprising:
receiving at a first Bluetooth device (102), between two consecutive scanning periods of said first Bluetooth device, a scan request from a second Bluetooth device (140);
measuring a signal strength of said scan request; and
estimating a proximity between said first and second Bluetooth devices based on the signal strength of said scan request.

9. The method of claim 8 comprising transmitting an advertisement frame, and receiving said scan request in response to said advertisement frame.

10. The method of claim 8 comprising receiving an advertisement frame and a scan response from said second Bluetooth device (140) during a scanning period of said first Bluetooth device (102), measuring a signal strength of said advertisement frame and a signal strength of said scan response, and estimating said proximity based on the signal strength of said scan request, the signal strength of said advertisement frame and the signal strength of said scan response.

11. The method of any one of claims 8-10 comprising estimating said proximity when there is no establishment of a Bluetooth connection between said first and second Bluetooth devices.

12. The method of any one of claims 8-11, wherein the signal strength of said scan request comprises a Receive Signal Strength Indication (RSSI).

13. A product (600) including a non-transitory storage medium (602) having stored thereon instructions that, when executed by a machine, result in the method of any one of claims 8-12.

## Patentansprüche

1. Vorrichtung zur drahtlosen Kommunikation, wobei die Vorrichtung Folgendes umfasst:
ein Funkgerät (114) zum Empfangen, an einer ersten Bluetooth-Einrichtung (102), einer Abtastanforderung von einer zweiten Bluetooth-Einrichtung (140) zwischen zwei aufeinanderfolgenden Abtastperioden der ersten Bluetooth-Einrichtung und zum Messen einer Signalstärke der Abtastanforderung; und
einen Näheschätzer (112) zum Schätzen einer Nähe zwischen der ersten und der zweiten Bluetooth-Einrichtung basierend auf der Signalstärke der Abtastanforderung.

2. Vorrichtung nach Anspruch 1, wobei das Funkgerät (114) einen Ankündigungsrahmen übertragen soll und die Abtastanforderung als Reaktion auf den Ankündigungsrahmen empfangen soll.

3. Vorrichtung nach Anspruch 1, wobei das Funkgerät (114) einen Ankündigungsrahmen und eine Abtastantwort von der zweiten Bluetooth-Einrichtung (140) während einer Abtastperiode der ersten Bluetooth-Einrichtung (102) empfangen soll und eine Signalstärke des Ankündigungsrahmens und eine Signalstärke der Abtastantwort messen soll und wobei der Näheschätzer (112) die Nähe basierend auf der Signalstärke der Abtastanforderung, der Signalstärke des Ankündigungsrahmens und der Signalstärke der Abtastantwort schätzen soll.

4. Vorrichtung nach einem der Ansprüche 1-3, wobei der Näheschätzer (112) die Nähe schätzen soll, wenn es keine Erstellung einer Bluetooth-Verbindung zwischen der ersten und der zweiten Bluetooth-Einrichtung gibt.

5. Vorrichtung nach einem der Ansprüche 1-4, wobei die Signalstärke der Abtastanforderung eine Empfangssignalstärkenindikation (RSSI) umfasst.

6. Vorrichtung nach einem der Ansprüche 1-5, wobei die erste Bluetooth-Einrichtung (102) eine Bluetooth-Low-Energy(BLE)-Einrichtung umfasst.

7. System (100) zur drahtlosen Kommunikation, wobei das System Folgendes umfasst:
eine erste mobile Einrichtung (102), die Folgendes beinhaltet:
mindestens eine Antenne (108) und
die Vorrichtung nach einem der Ansprüche 1-6.

8. Verfahren zur drahtlosen Kommunikation, wobei das Verfahren Folgendes umfasst:
Empfangen, an einer ersten Bluetooth-Einrichtung (102), zwischen zwei aufeinanderfolgenden Abtastperioden der ersten Bluetooth-Einrichtung, einer Abtastanforderung von einer zweiten Bluetooth-Einrichtung (140);
Messen einer Signalstärke der Abtastanforderung und
Schätzen einer Nähe zwischen der ersten und der zweiten Bluetooth-Einrichtung basierend auf der Signalstärke der Abtastanforderung.

9. Verfahren nach Anspruch 8, das Übertragen eines Ankündigungsrahmens und Empfangen der Abtastanforderung als Reaktion auf den Ankündigungsrahmen umfasst.

10. Verfahren nach Anspruch 8, das Empfangen eines Ankündigungsrahmens und einer Abtastantwort von der zweiten Bluetooth-Einrichtung (140) während einer Abtastperiode der ersten Bluetooth-Einrichtung (102), Messen einer Signalstärke des Ankündigungsrahmens und einer Signalstärke der Abtastantwort und Schätzen der Nähe basierend auf der Signalstärke der Abtastanforderung, der Signalstärke des Ankündigungsrahmens und der Signalstärke der Abtastantwort umfasst.

11. Verfahren nach einem der Ansprüche 8-10, das Schätzen der Nähe, wenn es keine Erstellung einer Bluetooth-Verbindung zwischen der ersten und der zweiten Bluetooth-Einrichtung gibt, umfasst.

12. Verfahren nach einem der Ansprüche 8-11, wobei die Signalstärke der Abtastanforderung eine Empfangssignalstärkenindikation (RSSI) umfasst.

13. Produkt (600), das ein nicht flüchtiges Speichermedium (602) mit darauf gespeicherten Anweisungen beinhaltet, die bei Ausführung durch eine Maschine im Verfahren nach einem der Ansprüche 8-12 resultieren.

## Revendications

1. Appareil de communication sans fil, l'appareil comprenant :
une radio (114) pour recevoir, au niveau d'un premier dispositif Bluetooth (102), une demande de balayage en provenance d'un second dispositif Bluetooth (140) entre deux périodes de balayage consécutives dudit premier dispositif Bluetooth et pour mesurer une intensité de signal de ladite demande de balayage ; et
un estimateur de proximité (112) pour estimer une proximité entre lesdits premier et second dispositifs Bluetooth, sur la base de l'intensité de signal de ladite demande de balayage.

2. Appareil selon la revendication 1, dans lequel ladite radio (114) est destinée à transmettre une trame de message publicitaire et à recevoir ladite demande de balayage à la suite de ladite trame de message publicitaire.

3. Appareil selon la revendication 1, dans lequel ladite radio (114) est destinée à recevoir une trame de message publicitaire et une réponse de balayage en provenance dudit second dispositif Bluetooth (140) pendant une période de balayage dudit premier dispositif Bluetooth (102) et à mesurer une intensité de signal de ladite trame de message publicitaire et une intensité de signal de ladite réponse de balayage, et dans lequel ledit estimateur de proximité (112) est destiné à estimer ladite proximité en se basant sur l'intensité de signal de ladite demande de balayage, sur l'intensité de signal de ladite trame de message publicitaire et sur l'intensité de signal de ladite réponse de balayage.

4. Appareil selon l'une quelconque des revendications 1 à 3, dans lequel ledit estimateur de proximité (112) est destiné à estimer ladite proximité lorsqu'il n'y a pas d'établissement d'une connexion Bluetooth entre lesdits premier et second dispositifs Bluetooth.

5. Appareil selon l'une quelconque des revendications 1 à 4, dans lequel l'intensité de signal de ladite demande de balayage comprend une indication d'intensité de signal de réception (RSSI).

6. Appareil selon l'une quelconque des revendications 1 à 5, dans lequel ledit premier dispositif Bluetooth (102) comprend un dispositif Bluetooth à faible énergie (BLE).

7. Système (100) de communication sans fil, le système comprenant :
un premier dispositif mobile (102) comprenant :
au moins une antenne (108) ; et
l'appareil selon l'une quelconque des revendications 1 à 6.

8. Procédé de communication sans fil, le procédé consistant :
à recevoir, au niveau d'un premier dispositif Bluetooth (102), entre deux périodes de balayage consécutives dudit premier dispositif Bluetooth, une demande de balayage en provenance d'un second dispositif Bluetooth (140) ;
à mesurer une intensité de signal de ladite demande de balayage ; et
à estimer une proximité entre lesdits premier et second dispositifs Bluetooth, sur la base de l'intensité de signal de ladite demande de balayage.

9. Procédé selon la revendication 8, consistant à transmettre une trame de message publicitaire et à recevoir ladite demande de balayage à la suite de ladite trame de message publicitaire.

10. Procédé selon la revendication 8, consistant à recevoir une trame de message publicitaire et une réponse de balayage en provenance dudit second dispositif Bluetooth (140) pendant une période de balayage dudit premier dispositif Bluetooth (102), à mesurer une intensité de signal de ladite trame de message publicitaire et une intensité de signal de ladite réponse de balayage et à estimer ladite proximité en se basant sur l'intensité de signal de ladite demande de balayage, sur l'intensité de signal de ladite trame de message publicitaire et sur l'intensité de signal de ladite réponse de balayage.

11. Procédé selon l'une quelconque des revendications 8 à 10, consistant à estimer ladite proximité lorsqu'il n'y a pas d'établissement d'une connexion Bluetooth entre lesdits premier et second dispositifs Bluetooth.

12. Procédé selon l'une quelconque des revendications 8 à 11, dans lequel l'intensité de signal de ladite demande de balayage comprend une indication d'intensité de signal de réception (RSSI).

13. Produit (600) comprenant un support de stockage non transitoire (602) sur lequel sont stockées des instructions qui, lorsqu'elles sont exécutées par une machine, ont pour résultat le procédé selon l'une quelconque des revendications 8 à 12.
